# FASCICULE DE BREVET EUROPEEN

(11) **EP 1 334 607 B1**
(45) Date de publication et mention de la délivrance du brevet: **12.10.2005**
(21) Numéro de dépôt: 01996966.6
(22) Date de dépôt: 13.11.2001
(51) Int. Cl.: H04M 3/493

(54) **PROCEDE POUR ASSOCIER DES MESSAGES ECRITS A DES MESSAGES VOCAUX A TRAVERS LE RESEAU TELEPHONIQUE PUBLIC COMMUTE**
VERFAHREN UM SCHRIFTLICHE MITTEILUNGEN ZUSAMMEN MIT GESPROCHENEN MITTEILUNGEN DURCH EINES ÖFFENTLICHES NETZ ZU VERMITTELN
METHOD FOR ASSOCIATING WRITTEN MESSAGES WITH VOICE MESSAGES OVER A PUBLIC SWITCHED TELEPHONE NETWORK

(30) Priorité: 14.11.2000 FR 0014757
(43) Date de publication de la demande: 13.08.2003
(73) Titulaire: FRANCE TELECOM, 75015 Paris (FR)
(72) Inventeur: LOTTIN, Philippe, F-22560 Trebeurden (FR); HUIBAN, Jean-Yves, F-22300 Ploulech (FR); DAOUBEN, Jean, F-22560 Trebeurden (FR); PERRET, Pascal, F-38920 Crolles (FR); PETIT, Jean-Claude, F-22700 Perros Guirec (FR)
(74) Mandataire: Maillet, Alain
(86) Numéro de dépôt international: PCT/FR2001/003534
(87) Numéro de publication internationale: WO 2002/041614

(56) Documents cités:
- DE-A- 10 019 385
- US-A- 5 802 526

## Description

La présente invention concerne un procédé et un dispositif de diffusion de messages écrits associés à des messages vocaux à travers le réseau téléphonique public commuté.

Par messages vocaux, on entend des séquences sonores comprenant des enregistrements de voix humaine obtenus par enregistrement de la voix d'une personne ou par synthèse vocale. Par messages écrits, on entend des données adaptées à être visualisées par exemple sur un écran sous forme de caractères alphanumériques.

Ces dernières années ont vu un grand développement des services vocaux. Un serveur vocal comme par exemple un serveur Audiotel de France Télécom est accessible par l'intermédiaire du réseau téléphonique public commuté de France Télécom à l'intérieur duquel il est identifié de manière classique par un numéro de téléphone. Ce serveur comprend un moyen d'interface adapté à interpréter des commandes DTMF générées par la manipulation des touches d'un clavier téléphonique et/ou des commandes vocales. Le serveur communique avec l'appelant à l'aide de messages vocaux. Les messages vocaux sont émis sous forme de blocs en réponse aux commandes transmises par l'appelant. Chaque bloc de message vocal est préenregistré et emmagasiné avec adressage approprié dans un moyen de stockage du serveur vocal. En général, un message vocal d'accueil est émis lors de la connexion entre le serveur et l'appelant, puis un message spécifique est émis chaque fois que l'appelant actionne une touche de son téléphone formant commande du serveur. Parmi les services vocaux existants, on peut citer comme exemple des services de messagerie, des services de diffusion de bulletins météorologiques, des services d'acheminement d'une communication téléphonique, des services comme le rappel du dernier appelant ou le rappel d'un numéro occupé.

Parfois, les serveurs vocaux diffusent des messages longs contenant un grand nombre d'informations. Par exemple, un message visant à guider l'appelant en énumérant les différentes commandes qui sont à sa disposition doit indiquer chaque touche du téléphone que l'appelant peut actionner et le résultat qui sera alors obtenu. De tels messages sont de plus en plus difficiles à comprendre, notamment pour les personnes âgées ou les personnes accusant un handicap.

Il est fait également référence aux documents d'art antérieur US-A-5 802 526 et DE-A-100 19 385.

La présente invention a comme objectif notamment de simplifier la compréhension des messages vocaux utilisés dans les services vocaux à travers le réseau téléphonique commuté.

L'invention est comme définie dans les revendications indépendantes 1 et 8, des formes préférées étant décrites dans les revendications dépendantes.

La présente invention propose un procédé pour associer des messages écrits à des messages vocaux à travers le réseau téléphonique public commuté, lesdits messages vocaux étant émis sous forme de blocs par un serveur vocal en réponse à des commandes transmises par un terminal téléphonique d'un appelant, chaque bloc de message vocal étant préenregistré et emmagasiné avec adressage approprié dans un moyen de stockage dudit serveur vocal, caractérisé en ce qu'il comprend une étape préalable consistant à associer à chaque bloc de message vocal une séquence sonore formant trame de données audio correspondant à une trame de données numériques de message écrit, une étape de transmission consistant à transmettre à travers le réseau téléphonique public commuté ladite trame de données audio avec ledit bloc de message vocal, une étape de décodage consistant à convertir, au niveau dudit terminal téléphonique dudit appelant, ladite trame de données audio de message écrit en ladite trame de données numériques de message écrit, et une étape de visualisation consistant à visualiser ledit message écrit.

Ainsi, lorsqu'un message vocal est émis par le haut-parleur du terminal téléphonique de l'appelant, un message écrit reprenant les éléments d'information essentiels du message vocal s'affiche sur un écran. De la sorte, est fourni un support écrit résumant le texte vocal énoncé. Le décodage et l'affichage du message écrit peuvent être réalisés par un terminal téléphonique existant à l'heure actuelle et muni d'un processeur de signaux numériques (DSP) programmable et d'un écran de visualisation ou par un boîtier spécifique qui se rajoute à l'installation existante. Ces étapes peuvent également être exécutées par un appareil prévu à cet effet et pouvant être connecté à un terminal téléphonique standard. Les données de message écrit peuvent être conformes, par exemple, aux règles définies dans le protocole de transmission de données V23 normalisé à l'ETSI (European Telecommunications Strandards Institute) et décrit dans le document ETSI EN 300 659-2 intitulé Public Switched Telephone Network (PSTN) : Subscriber line protocol over the local loop for display (and related) services- Part 2 : Off-hook data transmission et le document EN 300 659-3 intitulé "Access and Terminals (AT) ; Analogue to the Public Switched Telephone Network (PSTN) ; Subscriber line protocol over the local loop for display (and related) services ; Part 3 : Data link message and parameter". Cette norme définit le protocole de transmission de données en mode décroché. Ce protocole est déjà utilisé actuellement, par exemple, pour la présentation du numéro après un signal d'appel. Lorsque la trame de données V23 est préenregistrée au début du bloc de message vocal, elle est transmise directement par le serveur vocal, en mode décroché, sans implication du commutateur.

Avantageusement, ladite étape de transmission transmet ladite trame de données audio de message écrit avant une étape de transmission dudit bloc de message vocaL

Selon un autre aspect de la présente invention, le procédé comprend également une étape de détection de la présence d'un moyen de décodage au niveau du terminal téléphonique de l'appelant, ladite étape de transmission ne transmettant pas ladite trame de données audio de message écrit lorsque ladite étape de détection ne détecte pas la présence dudit moyen de décodage.

Selon un autre aspect de la présente invention, l'étape préalable consiste à préenregistrer au début de chaque bloc de message vocal ladite trame de données audio de message écrit, l'étape de transmission transmettant à travers le réseau téléphonique public commuté ladite trame de données audio de message écrit et ledit message vocal dans un même bloc.

Selon un autre aspect de la présente invention, ladite trame de données audio de message écrit est générée dynamiquement en fonction du contenu dudit bloc de message vocal.

Avantageusement, une temporisation adaptée est ménagée entre ladite trame de données audio de message écrit et ledit message vocal.

Selon un autre aspect de la présente invention, est proposé un dispositif pour associer des messages écrits à des messages vocaux à travers le réseau téléphonique public commuté, lesdits messages vocaux étant émis sous forme de blocs par un serveur vocal en réponse à des commandes transmises par un terminal téléphonique d'un appelant, chaque bloc de message vocal étant préenregistré et emmagasiné avec adressage approprié dans un moyen de stockage dudit serveur vocal, caractérisé en ce qu'il comprend, au niveau dudit serveur vocal, un moyen pour associer à chaque bloc de message vocal une séquence sonore formant trame de données audio correspondant à une trame de données numériques de message écrit et, au niveau dudit terminal téléphonique dudit appelant, un moyen pour convertir ladite trame de données audio de message écrit en ladite trame de données numériques de message écrit, et un moyen pour visualiser ledit message écrit.

Les caractéristiques de l'invention mentionnées ci-dessus, ainsi que d'autres apparaîtront plus clairement à la lecture de la description suivante d'exemples de réalisation, ladite description étant faite en relation avec les dessins joints, où:
la Fig. 1 est un organigramme représentant un procédé d'envoi d'un message écrit associé à un message vocal selon un premier mode de réalisation de la présente invention ;
la Fig. 2 est un schéma montrant une séquence de transmission lorsque le terminal téléphonique est adapté à recevoir des messages écrits, selon le premier mode de réalisation de la présente invention ;
la Fig. 3 est un schéma montrant une séquence de transmission lorsque le terminal téléphonique n'est pas adapté à recevoir des messages écrits, selon le premier mode de réalisation de la présente invention ; et
la Fig. 4 est un schéma montrant une séquence de transmission lorsqu'une trame de données de message écrit est enregistrée avec le bloc de message vocal, selon un second mode de réalisation de la présente invention.

Le procédé pour associer des messages écrits à des messages vocaux selon la présente invention intervient dans le cadre connu de la communication avec des serveurs vocaux comme par exemple un serveur Audiotel de France Télécom. Ainsi qu'il est bien connu, un tel serveur est accessible par l'intermédiaire du réseau téléphonique commuté de France Télécom. Ce serveur reçoit des instructions d'un appelant par commandes DTMF et/ou par commandes vocales et répond à ces instructions par le biais de messages vocaux. Les messages vocaux sont émis sous forme de blocs, chaque bloc de message vocal étant préenregistré et emmagasiné avec adressage approprié dans une unité de stockage du serveur vocal.

Selon la présente invention, une étape préalable consiste à associer à chaque bloc de message vocal une trame de données audio représentative d'une trame de données numériques de message écrit. Le codage des données numériques de message écrit est réalisé, par exemple, conformément au protocole de transmission de données V23. Un émulateur sert à définir les trames de données V23 qui sont enregistrées sous la forme de fichiers sons. Ces trames de données V23 sont adaptées à être transmises en mode décroché.

Le décodage des trames de données V23 nécessite un dispositif approprié. Ce dispositif peut être réalisé à partir d'un terminal haut de gamme de France Télécom, équipé d'un processeur de signaux numériques (DSP) programmable et d'un écran d'affichage. Alternativement, il peut être réalisé à partir d'un appareil prévu à cet effet pouvant être raccordé au terminal téléphonique. Un moyen récepteur MODEM permet le décodage des trames de données V23. A la réception d'un signal d'appel terminal (SAT), le récepteur MODEM est activé et répond par un signal DTMF spécifique de prise en compte.

Selon une variante de réalisation, le récepteur MODEM, en même temps qu'il effectue sa réponse par envoi d'un signal de prise en compte (signal DTMF spécifique) peut également transmettre un signal de format d'affichage ou de type de format d'affichage. Ce dernier signal peut soit décrire le format de la zone d'affichage où seront écrits les messages (par exemple, 16 lignes de 4 caractères) soit donner la référence d'un type de format (par exemple, type 1 : 16 lignes de 4 caractères, type 2 : 16 lignes de 8 caractères, etc.). Cette dernière solution permet de limiter le nombre d'octets à transmettre.

S'il reçoit le signal de prise en compte, le serveur pourra émettre les séquences sonores formant trame de données audio correspondant à une trame de données numériques de message écrit pour l'affichage de ces messages écrits que le récepteur MODEM peut alors recevoir et décoder.

De plus, s'il a reçu en outre les signaux de format d'affichage, il pourra transmettre ces séquences sonores formant trame de données audio correspondant à une trame de données numériques de message écrit dans le format adéquat pour un affichage correct dans la zone d'affichage. Par exemple, si la zone d'affichage est de petite dimension, il ne pourra transmettre des signaux que pour des mots clefs, alors que si la zone d'affichage est de plus grande dimension, il pourra transmettre les signaux pour des messages complets.

On notera qu'il y a des cas, par exemple celui où le message vocal a été enregistré dans un répondeur du réseau, où la trame de données audio est transmise indépendamment de la réponse du terminal.

On notera que le haut-parleur du terminal peut être désactivé lors de la réception des trames de données V23.

La trame de données numériques (résultant de la séquence sonore de trame de données audio) contient le texte contenu dans un champ dénommé "Display Information" et destiné à être affiché dès sa réception par le terminal.

On notera que le serveur peut transmettre également des séquences sonores de trame de données audio correspondant à des trames de données numériques incluant, associées ou non avec du texte contenu dans un champ "Display Information", accompagnant ou pas un bloc de message vocal, un ou plusieurs paramètres différents, comme par exemple un numéro de téléphone et un nom associé, etc. qui sont alors enregistrés dans le terminal pour un usage ultérieur (constitution d'une base de données, etc.).

En particulier, le premier octet du champ "Display Information" contient un code (généralement 50H) indiquant la nature de ce paramètre, à savoir un ensemble de données numériques de message écrit, le second octet contient la longueur de ce paramètre, le troisième octet contient différentes informations sur ce paramètre, le huitième bit de cet octet indiquant si l'information doit être ou non enregistrée, et les octets suivants contiennent chacun un caractère du message. La détection de ce paramètre texte 50H permet un affichage d'informations écrites d'une longueur pouvant aller jusqu'à 253 caractères. Il est prévu un mode déroulant de l'affichage avec possibilité d'interrompre l'affichage et de le relancer. Les informations écrites sont affichées en parallèle aux informations vocales correspondantes.

Ces informations ne devant pas être enregistrées, le huitième bit du troisième octet du paramètre texte 50 H est mis au niveau bas signifiant que l'information n'est pas enregistrée.

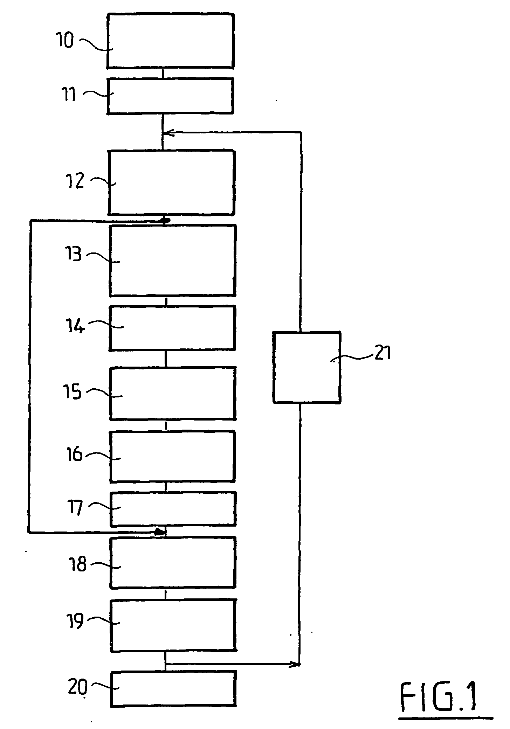

La Fig. 1 montre un procédé d'envoi d'un message écrit associé à un message vocal lors de la communication d'un appelant avec un serveur vocal, selon un premier mode de réalisation de la présente invention.

Dans une étape 10, l'appelant compose le numéro de téléphone du serveur vocal à l'aide des touches de son terminal téléphonique. Dans une étape 11, la connexion est établie. A ce moment là, le serveur doit transmettre à l'appelant son message d'accueil. Pour cela, dans une étape 12, le serveur envoie un signal SAT. Si le terminal téléphonique est pourvu d'un récepteur MODEM, ce dernier va être activé par le signal SAT et le procédé passe à l'étape 13. Sinon, le procédé passe directement à l'étape 18. Dans une étape 13, le terminal téléphonique envoie la réponse par un signal DTMF spécifique vers le serveur. Dans une étape 14, le terminal désactive son haut-parleur pour que les données V23 ne soient pas audibles. Dans une étape 15, le serveur envoie vers le terminal une trame de données V23. Dans une étape 16, le terminal décode la trame de données V23 qu'elle convertit en une trame de données numériques sous la forme d'un paramètre texte 50H. La détection de ce paramètre provoque l'affichage d'un message écrit résumant le message d'accueil du serveur vocal. Dans une étape 17, le terminal réactive son haut-parleur. Dans une étape 18, le serveur envoie vers le terminal le message vocal d'accueil. Ce dernier est diffusé par le haut-parleur du terminal téléphonique. L'appelant a sous les yeux le résumé écrit de ce message, récapitulant notamment le menu des commandes et les touches correspondantes. Dans une étape 19, l'appelant peut actionner une touche de son téléphone afin de choisir une commande du menu proposé, dans ce cas, le procédé va à l'étape 21. Sinon, l'appelant peut raccrocher dans une étape 20. Dans une étape 21, le serveur reçoit le code DTMF de commande et effectue l'action appropriée. L'action effectuée peut consister à transmettre à l'appelant un autre message vocal. Dans ce cas, les étapes 12 à 19 sont à nouveau exécutées pour le nouveau message vocal et le message écrit correspondant.

On notera que l'étape 18 pourrait être mise en oeuvre juste avant l'étape 12 d'envoi du signal SAT. Le message vocal serait alors transmis d'abord et, si besoin est, la séquence sonore formant trame de données audio correspondant à une trame de données numériques de message écrit associées ensuite. Dans ce cas, l'issue de l'étape 12 conduirait, selon le cas, à l'étape 13 ou à l'étape 19.

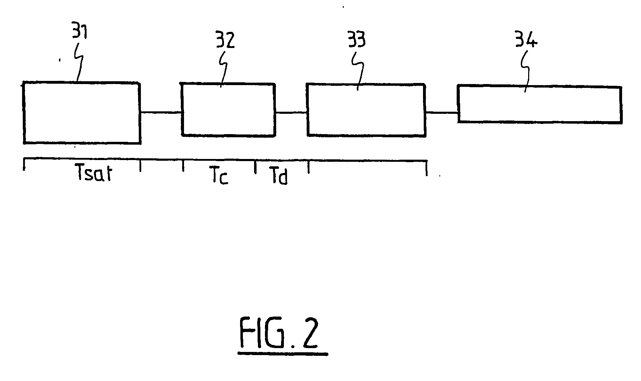

La Fig. 2 est un schéma montrant une séquence de transmission lorsque le terminal téléphonique est adapté à recevoir des messages écrits, c'est-à-dire lorsque le procédé exécute les étapes 12 à 18. Le bloc 31 contient le signal d'activation du récepteur MODEM (SAT). Il s'agit d'un signal bifréquence dit également DTMF (2130 Hz et 2750 Hz) qui est transmis sur un temps Tₛₐₜ compris entre 80 et 85 ms. Le bloc 32 contient la réponse du récepteur MODEM. La durée minimale pour la prise en compte de l'acquittement du terminal est un temps T_{c} compris entre 40 et 55 ms. Le bloc 33 contient la trame de données V23. La durée d'attente avant l'envoi de la trame de données V23 est un temps T_{d} compris entre 55 et 200 ms. Le bloc 34 contient le message vocal émis après que la trame de données V23 a été transmise, avec une temporisation suffisante pour permettre la réactivation du haut-parleur.

On notera que le bloc 34 pourrait être transmis avant les blocs 31, 32 et 33.

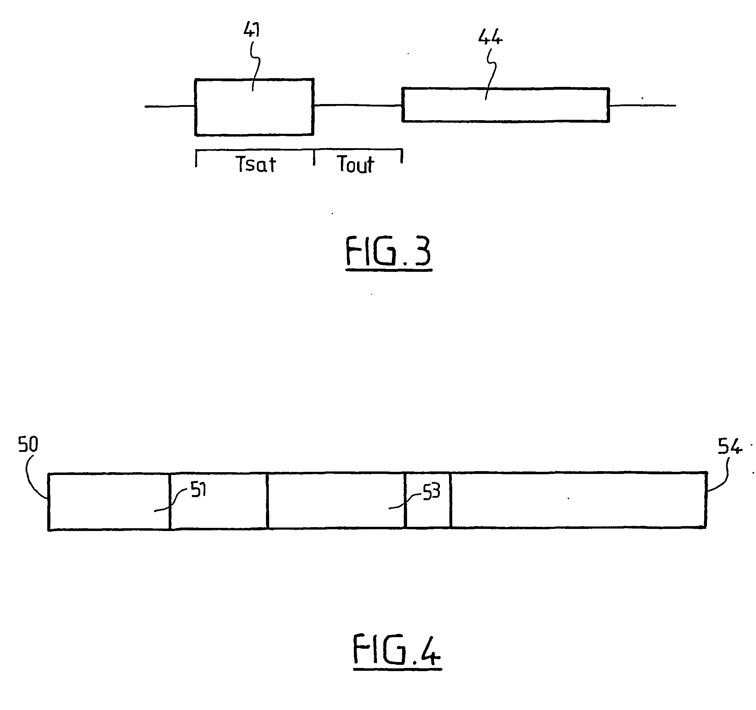

La Fig. 3 est un schéma montrant une séquence de transmission lorsque le terminal téléphonique n'est pas adapté à recevoir des messages écrits, c'est-à-dire lorsque le procédé passe directement de l'étape 12 à l'étape 18. Le bloc 41 contient le signal d'activation du récepteur MODEM (SAT), identique à celui représenté par le bloc 31 dans la Fig. 2. Après l'écoulement du temps Tₛₐₜ, une temporisation Tₒᵤₜ durant entre 155 et 165 ms représente la durée d'attente maximale de l'acquittement du terminal. Passé cette durée, le serveur suppose que le terminal ne reconnaît pas le signal SAT et, en conséquence, ne transmet pas la trame de données V23. Le message vocal est alors directement transmis, ainsi que l'indique le bloc 44 dont le contenu est identique à celui du bloc 34 de la Fig. 2.

Là également, le bloc 44 pourrait être transmis avant le bloc 41.

Les trames de données V23 peuvent être préenregistrées ou générées dynamiquement en fonction du contenu du message vocal correspondant.

La Fig. 4 est un schéma montrant une séquence de transmission de données lorsque, selon un second mode de réalisation de la présente invention, une trame de données audio V23 de message écrit est enregistrée dans la même séquence que le message vocal. Dans ce cas, tous les éléments transmis du serveur au terminal sont enregistrés dans un même bloc audio 50. Un sous-bloc 51, en début de bloc, contient le signal d'activation du récepteur MODEM (SAT) identique à celui représenté par le bloc 31 dans la Fig. 2 et par le bloc 41 dans la Fig. 3. Un sous-bloc suivant 53, intervenant après temporisation adaptée, contient la trame de données V23 identique à celle représentée par le bloc 33 dans la Fig. 2. Le dernier sous-bloc 54, intervenant après temporisation adaptée, contient le message vocal identique à celui représenté par le bloc 34 dans la Fig. 2 et par le bloc 44 dans la Fig. 3.

On notera qu'à l'instar des modes précédents, le bloc 54 pourrait être présent dans la trame 50 avant les blocs 51 et 53.

Dans le cas de serveurs vocaux de base, un tel mode de réalisation qu'implique le message V23 soit systématiquement transmis, étant enregistré en dur avec le message vocal, alors que, dans le cas de serveurs vocaux évolués, le message V23 est composé dynamiquement en fonction du contenu du message à traduire. Afin de ne pas perturber un utilisateur qui ne possède pas de terminal adéquat pour la transmission V23, le serveur peut être configuré afin de ne pas envoyer de messages vocaux contenant des données V23. Deux types de messages vocaux sont enregistrés dans le serveur, les uns avec des données V23 et les autres sans données V23, les contenus vocaux étant par ailleurs identiques. Le serveur, selon la configuration initiale, transmet le message adéquat.

## Revendications

1. Procédé pour associer des messages écrits à des messages vocaux à travers le réseau téléphonique public commuté, lesdits messages vocaux (34 ; 44 ; 54) étant émis sous forme de blocs par un serveur vocal en réponse à des commandes transmises par un terminal téléphonique d'un appelant, chaque bloc de message vocal étant préenregistré et emmagasiné avec adressage approprié dans un moyen de stockage dudit serveur vocal, ledit procédé comprenant :
a) une étape préalable consistant à associer à chaque bloc de message vocal (34 ; 54) une séquence sonore formant trame de données audio (33 ; 53) correspondant à une trame de données numériques de message écrit,
une étape b) de détection de la présence d'un moyen de décodage au niveau dudit terminal téléphonique dudit appelant,
une étape de réponse (13) indiquant au serveur si oui ou non ledit terminal téléphonique dudit appelant comporte un moyen de décodage,
c) une étape de transmission (15) consistant à transmettre à travers le réseau
téléphonique public commuté ladite séquence sonore formant trame de données audio (33 ; 53),
d) une étape de décodage et de visualisation (16) consistant, d'une part, à convertir, au niveau dudit terminal téléphonique dudit appelant, ladite trame de données audio en ladite trame de données numériques de message écrit et, d'autre part, à visualiser le message écrit contenu dans ladite trame de données numériques,
e) une étape de transmission du bloc de message vocal correspondant et de diffusion dudit message vocal (18),
ladite étape de transmission (15) et ladite étape de décodage et de visualisation (16) n'étant pas exécutées lorsque ladite étape de détection (12) ne détecte pas la présence dudit moyen de décodage, et
ladite étape de réponse (13) consistant de plus à donner le format d'affichage ou le type de format d'affichage dudit message écrit, ledit serveur transmettant ladite séquence sonore formant trame de données audio (33 ; 53) dans un format correspondant au format indiqué par ladite étape de réponse (13).

2. Procédé selon la revendication 1, **caractérisé en ce qu'**il comporte une étape de désactivation (14) du haut-parleur dudit terminal et une étape de ré-activation (17) dudit haut-parleur respectivement mises en oeuvre après l'étape de détection (12) et après l'étape de décodage et visualisation (16).

3. Procédé selon la revendication 1 ou 2, **caractérisé en ce que** ledit bloc de message vocal (34, 54) est transmis, soit seul lorsque ladite étape de détection (12) ne détecte pas la présence dudit moyen de décodage, soit dans un même bloc (50) que ladite séquence sonore formant trame de données audio (33 ; 53) correspondant à une trame de données numériques de message écrit, et ce, lorsque ladite étape de détection (12) détecte la présence dudit moyen de décodage.

4. Procédé selon une des revendications 1 à 3, **caractérisé en ce que** ladite séquence sonore formant trame de données audio (33 ; 53) est générée dynamiquement en fonction du contenu dudit bloc de message vocal.

5. Procédé selon l'une quelconque des revendications précédentes, **caractérisé en ce que** ledit serveur peut transmettre également des séquences sonores formant trame de données audio (33 ; 53) correspondant à une trame de données numériques incluant plusieurs autres paramètres différents, comme par exemple un numéro de téléphone et un nom associé, qui peuvent être enregistrés dans le terminal pour un usage ultérieur.

6. Procédé selon l'une quelconque des revendications précédentes, **caractérisé en ce qu'**une temporisation adaptée est ménagée entre ladite séquence sonore formant trame de données audio (33 ; 53) et ledit message vocal (34 ;54).

7. Procédé selon l'une quelconque des revendications précédentes, **caractérisé en ce que** ladite étape de transmission (15) est exécutée même lorsque ladite étape de détection (12) ne détecte pas la présence dudit moyen de décodage.

8. Dispositif pour associer des messages écrits à des messages vocaux à travers le réseau téléphonique public commuté, lesdits messages vocaux (34 ;44 ;54) étant émis sous forme de blocs par un serveur vocal en réponse à des commandes transmises par un terminal téléphonique d'un appelant, chaque bloc de message vocal étant préenregistré et emmagasiné avec adressage approprié dans un moyen de stockage dudit serveur vocal, ledit dispositif comprenant, au niveau dudit serveur vocal, un moyen pour associer à chaque bloc de message vocal (34 ;54) une séquence sonore (33 ;53) formant trame de données audio correspondant à une trame de données numériques de message écrit, et au niveau dudit terminal téléphonique dudit appelant, un moyen pour convertir ladite trame de données audio de message écrit en ladite trame de données numériques de message écrit, et un moyen pour visualiser ledit message écrit, **caractérisé en ce qu'**il comporte de plus, des moyens de détection de la présence d'un moyen de décodage au niveau dudit terminal téléphonique dudit appelant, des moyens de réponse pour indiquer au serveur si oui ou non ledit terminal téléphonique dudit appelant comporte un moyen de décodage, et des moyens pour désactiver la transmission, le décodage et la visualisation desdits messages lorsque lesdits moyens de détection (12) ne détectent pas la présence dudit moyen de décodage, et lesdits moyens de réponse (13) étant adaptés à donner de plus le format d'affichage ou le type de format d'affichage dudit message écrit, ledit serveur transmettant ladite séquence sonore formant trame de données audio (33 ; 53) dans un format correspondant au format indiqué par lesdits moyens de réponse (13).

## Patentansprüche

1. Verfahren zum Verbinden schriftlicher Mitteilungen mit Sprachmitteilungen über das öffentliche Fernsprechnetz, wobei die Sprachmitteilungen (34; 44; 54) von einem Sprachserver als Reaktion auf Befehle, die von einem Telefonterminal eines Anrufers übertragen werden, in Form von Blöcken gesendet werden, wobei jeder Sprachmitteilungsblock voraufgezeichnet und mit entsprechender Adressierung in einem Speichermittel des Sprachservers gespeichert ist, wobei das Verfahren Folgendes umfasst:
a) einen vorausgehenden Schritt, der darin besteht, mit jedem Sprachmitteilungsblock (34; 54) eine akustische Sequenz zu verbinden, die einen Audiodatenrahmen (33; 53) bildet, der einem Rahmen digitaler schriftlicher Mitteilungsdaten entspricht,
b) einen Schritt zum Erfassen der Gegenwart eines Decodierungsmittels auf der Ebene des Telefonterminals des Anrufes,
einen Antwortschritt (13), der dem Server anzeigt, ob das Telefonterminal des Anrufers ein Decodierungsmittel umfasst oder nicht,
c) einen Übertragungsschritt (15), der darin besteht, über das öffentliche Fernsprechnetz die akustische Sequenz, die einen Audiodatenrahmen (33; 53) bildet, zu übertragen,
d) einen Decodierungs- und Anzeigeschritt (16), der einerseits darin besteht, auf der Ebene des Telefonterminals des Anrufers den Audiodatenrahmen in den Rahmen digitaler schriftlicher Mitteilungsdaten umzuwandeln und andererseits die schriftliche Meldung anzuzeigen, die in dem Rahmen digitaler Daten enthalten ist,
e) einen Schritt des Übertragens des entsprechenden Sprachmitteilungsblocks und des Ausstrahlens der Sprachmitteilung (18),
wobei der Übertragungsschritt (15) und der Decodierungs- und Anzeigeschritt (16) nicht durchgeführt werden, wenn der Erfassungsschritt (12) keine Gegenwart des Decodierungsmittels erfasst und
wobei der Antwortschritt (13) darin besteht, ferner das Anzeigeformat oder den Typ des Anzeigeformats der schriftlichen Mitteilung anzuzeigen, wobei der Server die akustische Sequenz, die den Audiodatenrahmen (33; 53) bildet, in einem Format übermittelt, das dem von dem Antwortschritt (13) angezeigten Format entspricht.

2. Verfahren nach Anspruch 1, **dadurch gekennzeichnet, dass** es einen Deaktivierungsschritt (14) des Lautsprechers des Terminals und einen Reaktivierungsschritt (17) des Lautsprechers umfasst, die jeweils nach dem Erfassungsschritt (12) und nach dem Decodierungs- und Anzeigeschritt (16) durchgeführt werden.

3. Verfahren nach Anspruch 1 oder 2, **dadurch gekennzeichnet, dass** der Sprachmitteilungsblock (34, 54) entweder allein gesendet wird, wenn der Erfassungsschritt (12) keine Gegenwart des Decodierungsmittels erfasst, oder in einem gleichen Block (50) wie die akustische Sequenz, die den Audiodatenrahmen (33; 53) bildet, der einem Rahmen digitaler Daten einer schriftlichen Meldung entspricht, und dies, wenn der Erfassungsschritt (12) die Gegenwart des Decodierungsmittels erfasst.

4. Verfahren nach einem der Ansprüche 1 bis 3, **dadurch gekennzeichnet, dass** die akustische Sequenz, die den Audiodatenrahmen (33; 53) bildet, dynamisch in Abhängigkeit von dem Inhalt des Sprachmitteilungsblocks erzeugt wird.

5. Verfahren nach einem der vorhergehenden Ansprüche, **dadurch gekennzeichnet, dass** der Server auch akustische Sequenzen übertragen kann, die einen Audiodatenrahmen (33; 53) bilden, der einem Rahmen digitaler Daten entspricht, der mehrere andere verschiedene Parameter enthält, wie zum Beispiel eine Telefonrufnummer und einen zugehörigen Namen, die in dem Terminal für einen späteren Gebrauch gespeichert werden können.

6. Verfahren nach einem der vorhergehenden Ansprüche, **dadurch gekennzeichnet, dass** eine entsprechende Verzögerung zwischen der akustischen Sequenz, die den Audiodatenrahmen (33; 53) bildet, und der Sprachmitteilung (34; 54) eingerichtet ist.

7. Verfahren nach einem der vorhergehenden Ansprüche, **dadurch gekennzeichnet, dass** der Übertragungsschritt (15) auch ausgeführt wird, wenn der Erfassungsschritt (12) keine Gegenwart des Decodierungsmittels erfasst.

8. Vorrichtung zum Verbinden schriftlicher Mitteilungen mit Sprachmitteilungen über das öffentliche Fernsprechnetz, wobei die Sprachmitteilungen (34; 44; 54) in Form von Blöcken von einem Sprachserver als Reaktion auf Befehle gesendet werden, die von einem Telefonterminal eines Anrufers übertragen werden,
wobei jeder Sprachmitteilungsblock voraufgezeichnet und mit entsprechender Adressierung in einem Speichermittel des Sprachservers gespeichert ist,
wobei die Vorrichtung auf der Ebene des Sprachservers ein Mittel umfasst, um mit jedem Sprachmitteilungsblock (34; 54) eine akustische Sequenz (33; 53) zu verbinden, die den Audiodatenrahmen bildet, der einem Rahmen digitaler Daten einer schriftlicher Mitteilung entspricht, und auf der Ebene des Telefonterminals des Anrufers ein Mittel, um den Audiodatenrahmen der schriftlichen Mitteilung in den Rahmen digitaler Daten der schriftlichen Mitteilung umzuwandeln, und ein Mittel, um die schriftliche Mitteilung anzuzeigen, **dadurch gekennzeichnet, dass** sie ferner Mittel zum Erfassen der Gegenwart eines Decodierungsmittels auf der Ebene des Telefonterminals des Anrufers umfasst, Antwortmittel, um dem Server anzuzeigen, ob das Telefonterminal des Anrufers ein Decodierungsmittel umfasst oder nicht, und Mittel, um die Übertragung, das Decodieren und das Anzeigen der Mitteilungen zu deaktivieren, wenn die Erfassungsmittel (12) keine Gegenwart des Decodierungsmittels erfassen, und wobei die Antwortmittel (13) ferner das Anzeigeformat oder den Typ des Anzeigeformats der schriftlichen Mitteilung anzeigen können, wobei der Server die akustische Sequenz, die den Audiodatenrahmen (33; 53) bildet, in einem Format übermittelt, das dem von den Antwortmitteln (13) angezeigten Format entspricht.

## Claims

1. Method for associating written messages with voice messages over the switched public telephone network, said voice messages (34; 44; 54) being transmitted in the form of blocks by a voice server in response to commands transmitted by a telephone terminal of a caller, each voice message block being pre-recorded and stored with appropriate addressing in a storage means of said voice server, said method comprising:
(a) a preliminary step consisting in associating with each voice message block (34; 54) a sound sequence forming an audio data frame (33; 53) corresponding to a written message digital data frame;
(b) a step for detection of the presence of a decoding means at said telephone terminal of said caller,
a response step (13) indicating to the server whether said telephone terminal of said caller comprises a decoding means or not;
(c) a transmission step (15) consisting in transmitting said sound sequence forming an audio data frame (33; 53) over the switched public telephone network;
(d) a decoding and display step (16) consisting firstly in converting said audio data frame into said written message digital data frame at said telephone terminal of said caller and secondly in displaying the written message contained in said digital data frame;
(e) a step for transmission of the corresponding voice message block and diffusion of said voice message (18) said transmission step (15) and said decoding and display step (16) not being executed when said detection step (12) does not detect the presence of said decoding means, and said response step (13) consisting additionally in giving the display format or the type of display format of said written message, said server transmitting said sound sequence forming an audio data frame (33; 53) in a format corresponding to the format indicated by said response step (13).

2. Method according to claim 1, **characterised in that** it comprises a step (14) for deactivation of the loud speaker of said terminal and a step (17) for reactivation of said loud speaker respectively implemented after the detection step (12) and after the decoding and display step (16).

3. Method according to claim 1 or 2, **characterised in that** said voice message block (34; 54) is transmitted either on its own when said detection step (12) does not detect the presence of said decoding means or in a same block (50) as said sound sequence forming an audio data frame (33; 53) corresponding to a written message digital data frame when said detection step (12) detects the presence of said decoding means.

4. Method according to one of claims 1 to 3, **characterised in that** said sound sequence forming an audio data frame (33; 53) is generated dynamically as a function of the contents of said voice message block.

5. Method according to any one of the preceding claims, **characterised in that** said server can also transmit sound sequences forming an audio data frame (33; 53) corresponding to a digital data frame including a plurality of other different parameters, such as for example a telephone number and an associated name, which can be recorded in the terminal for subsequent use.

6. Method according to any one of the preceding claims, **characterised in that** a matched delay is created between said sound sequence forming an audio data frame (33; 53) and said voice message (34; 54).

7. Method according to any one of the preceding claims, **characterised in that** said transmission step (15) is executed even when said detection step (12) does not detect the presence of said decoding means.

8. Devised for associating written messages with voice messages over the switched public telephone network, said voice messages (34; 44; 54) being transmitted in the form of blocks by a voice server in response to commands transmitted by a telephone terminal of a caller, each voice message block being pre-recorded and stored with appropriate addressing in a storage means of said voice server, said device comprising at said voice server a means for associating with each voice message block (34; 54) a sound sequence (33; 53) forming an audio data frame corresponding to a written message digital data frame, and at said telephone terminal of said caller a means for converting said written message audio data frame into said written message digital data frame, and a means for displaying said written message, **characterised in that** it additionally comprises means for detection of the presence of a decoding means at said telephone terminal of said caller, response means for indicating to the server whether said telephone terminal of said caller comprises a decoding means or not, and means for deactivating the transmission, the decoding and the displaying of said messages when said detection means (12) do not detect the presence of said decoding means, and said response means (13) being adapted to give in addition the display format or the type of display format of said written message, said server transmitting said sound sequence forming an audio data frame (33; 53) in a format corresponding to the format indicated by said response means (13).
